# EUROPEAN PATENT SPECIFICATION

(11) **EP 2 682 296 B1**
(45) Date of publication and mention of the grant of the patent: **18.03.2015**
(21) Application number: 13466011.7
(22) Date of filing: 27.06.2013
(51) Int. Cl.: B60K 17/04, E02D 3/026, B60K 17/10, F16H 63/30, F16D 55/00

(54) **Assembly of an undirected axle having a driving mechanism**
Anordnung einer ungeleiteten Achse mit einem Antriebsmechanismus
Assemblage d'un essieu non dirigé présentant un mécanisme d'entraînement

(30) Priority: 02.07.2012 CZ 20120449
(43) Date of publication of application: 08.01.2014
(73) Proprietor: Ammann Czech Republic a.s., 549 01 Nové Mesto nad Metuji (CZ)
(72) Inventor: Jirman, Bohumil, 549 01 Nove Mesto nad Metuji (CZ)
(74) Representative: Pavlica, Tomas

(56) References cited:
- DE-A1- 19 504 451
- FR-A1- 2 469 296
- US-A- 4 158 972

## Description

### Field of the invention

The invention relates to an assembly of the undirected axle having a driving mechanism for tyre rollers or combined rollers, which assembly is used for driving of rollers.

### Background of the invention

At present, rollers comprising at least one driven axle provided with tyres are very often used for treatments of compacted surfaces. They are particularly the tyre roller and the combined roller. The tyre roller is a roller provided with tyres on both axles, which tyres mutually overlap in the direction of the longitudinal axis of the roller. This roller is intended to be used for compacting of the carrying, binding and covering layers of asphalt as well as of the natural subsoil and of the lime or cement stabilized materials. The tyre roller uses the kneading and squeezing effects. By means of modifying the pressure in the tyres, it is possible to modify the contact pressure during the compacting. The combined roller is a roller provided on one axle with a steel tread, or a steel divided tread, and the other axle is provided with tyres. The combined roller uses the static and vibration effects in combination with the kneading and squeezing ones. In the tyre axle, which axle is usually driven by any motor, mostly, it is not possible to modify the contact pressure during the compacting.

There are several design solutions of the tyre or combined rollers with the undirected driven axle, provided with tyres, at present. The first alternative of the design is disclosed by the EP patent No. 1,868,834 of the applicant Bonfiglioli Riduttori S. p. A. The patent, which comprises all the features mentioned in the preamble of claim 1, discloses an undirected axle provided with a pair of controlling driving motors that drive wheels on the left and the right half-axles by means of two identical gearboxes with terminal planet gearings and with two brakes. In this embodiment, the controlling hydraulic motors are mounted on the body of the half-axle and they are connected with the terminal gearboxes of the left and the right half-axles by means of shafts, wherein the shafts are always passing through the gaps between two adjacent wheels. Each terminal gearbox is provided with two opposite flanges at its sides, and one wheel is mounted on each flange, i.e. two wheels to each gearbox. This design provides for a difference in the rotational speed of the outer and the inner wheels in taking a turn by parallel action of both driving hydraulic motors, what allows independent change in one of the circuits with regard to the other one. In dependence to the actual machine speed, the hydraulic motors on both half-axles are set to the same volume. If one of the driven wheels starts to skid, this situation is solved by lowering the volume of the driving hydraulic motor at the skidding side. A disadvantage of this solution is that it is necessary to detect rotation speeds of both half-axles and compare them for setting up of the corresponding mode. Further, synchronization of the braking effect of the brakes of both half-axles, including the controlling of the continual ramping of the braking effect, is problematic in this design, where jerky slowing of the roller may be observed, what is both unpleasant for the driver and the respective roller components are overstressed, and moreover, such braking and skidding of the roller may also cause a damage of the rolled surface. Moreover, because of the independent driving mechanisms of the left and the right half-axles this design is rather expensive.

The other alternative design of the driving mechanism of the undirected axle uses two terminal gearboxes and two controlling motors placed in the wheels and mounted on the frame on a common bracket. On both gearboxes, dual tyre-wheels are mounted. A problem of this design is complexity of the hydraulic connections of the hydraulic motors. A disadvantage of this design is that only an emergency and parking brake is provided in this design. There is not provided any service brake in this design, only the hydrostatic braking effect can be used for braking of the machine, what is not always sufficient. Transmission of the driving force is provided either electronically by volume setting of the hydraulic motors and/or by a hydraulic proportioning device, what requires a complex design and is prone to breakdowns.

The third alternative design of the axle driving mechanism uses a pair of slow-running hydraulic motors situated in the wheels, mounted on the frame on a common bracket. A pair of dual tyre-wheels is mounted on both hydraulic motors. A disadvantage of this design is complexity of the hydraulic connections of the hydraulic motors. Also in this design, there is not provided any service brake. In this design, there is provided only an emergency and parking brake. Therefore, again, only the hydrostatic braking effect can be used for braking the machine. In case of this design, the recovering of the roller, e. g. in case of wheel skidding on one side, is slowed so as in the second alternative, i. e. either electronically by setting of the hydraulic motor volumes and/or by a hydraulic proportioning device.

### Summary of the invention

The above-mentioned disadvantages are removed or at least substantially alleviated by an assembly of undirected axle of a tyre roller, in particular of a road roller, provided with a driving mechanism, where the undirected axle is adapted for mounting on a machine frame by means of a bracket and is joined to a hydraulic motor for its driving, wherein said hydraulic motor is joined to a multi-disk brake serving as the service, safety and parking brakes of the machine, which multi-disk brake is joined with a cone gearing by an interconnecting shaft, to which cone gearing a driven wheel provided with the tyre is connected by a shaft, which driven wheel is provided with a hollow centre, wherein the substance of the invention consists in that a differential gearing provided with two opposite outputs is connected to the cone gearing, which differential gearing is provided with a differential interlock, wherein the first output of the differential gearing is connected to the first terminal gearbox provided with at least two transmission steps by means of the first rotary shaft, where at least one driven wheel provided with a tyre is connected to the output of the first terminal gearbox, and where the second output of the differential gearing is connected to the second terminal gearbox provided with at least two transmission steps by means of the second rotary shaft, where at least one driven wheel provided with a tyre is also connected to the output of the second terminal gearbox, wherein the transmission ratios of the first and the second terminal gearboxes are the same and the first and the second terminal gearboxes are correspondingly arranged in the hollow centres of the respective wheels with tyres on both sides of the axles.

Particularly advantageous is a controlling model of the hydraulic motor, i. e. such model, which allows varying rotation speed of the hydraulic motor at a constant flow rate of the hydraulic liquid. However, it is also possible to use a constant hydraulic motor without any possibility to control and to carry out the control by a controlling pump, setting up the volumetric flow rate in the circle. Then, the most preferable for controlling of the liquid volume in the circle is to use a combination of a controlling pump and a controlling hydraulic motor, wherein only the pump is controlled for the working speeds and the hydraulic motor is set at its maximum volume, while for the transporting speeds the pump is set to its maximum volume and the hydraulic motors of the axles are controlled to reach the maximum speed.

Especially preferably, the differential interlock is one of the following models: gear, friction, viscose or their mutual combinations.

In one preferable embodiment of the assembly of a driven axle having a driving mechanism, the hydraulic motor is joined with a multi-disk brake by a grooved coupling. It is so because the hydraulic motors are delivered with a grooved output shaft or with a cylinder shaft with keys, possibly with a conical shaft with a key. To make disassembly of a hydraulic motor easier, i.e. for a repair, it is preferable to join the hydraulic motor with the axle by means of a grooved coupling, which coupling allows taking it out.

In another preferable embodiment, a dual tyre wheel is joined with each terminal gearbox.

The assembly of the undirected axle of the tyre rollers and the combined rollers according to the present invention solve especially the following drawbacks of the above mentioned prior art solutions:
1) A single hydraulic motor with a single multi-disk brake is used for driving mechanism of an undirected axle, what simplifies the design of the driving mechanism, as because of one hydraulic motor and one brake acting on both gearboxes both the wheels kola on the left and the right half-axles are both driven and braked uniformly without any need of presence of the rotation speed sensor and the need to control the hydraulic motors of both half-axles by means of a computer. This, the above described solution increases reliability, decreases production costs, and last but not least also simplifies controlling of the machine. An advantage of using only one brake acting on all wheels provided with tyres on the undirected axle is an improved control of the braking effect, what improves quality of the rolled surface.
2) Owing to the design of the axle driving mechanism that is by a hydraulic motor arranged in the roller body and linked with the axle via a multi-disk brake, it is possible to use this brake not only as the emergency and the brake but also as the service brake of the roller, to that the roller can slow down in service, without the hydraulic motor being loaded in vain, which hydraulic motor is frequently raced, if no service brake is used, and consequently the hydraulic motor wears excessively.
3) The design of the undirected axle according to this invention allows easier hydraulic linking of the driving hydraulic motor and its repair, as it is together with the multi-disk brake placed at an easily accessible place, what makes repairs and common service actions, e. g. the regular maintenance, substantially easier and more rapid.
4) The axle can be placed not only horizontally, but also angled in the machine, and so better use the inner space of the machine for increasing of the ballast space volume.
5) The differential interlock is solved within the undirected axle in a mechanical way, it is reliable an undemanding with regard to the maintenance.
6) The design of the undirected axle according to the present invention so allows decreasing of the production costs of an undirected axle in case of both the tyre and the combined rollers substantially and provides a more reliable alternative of the driving mechanism.
7) There is a possibility to solve the air distribution system for varying the air pressure in the tyres during rolling so that it is placed in the centre of the axle.

### Brief Description of the Drawings

The invention will be more clearly comprehensible from the examples of its embodiments described with reference to the drawings thereof, in which:
Fig. 1 is a side view of a kinematic diagram of an assembly of an undirected axle having a driving mechanism; and
Fig. 2 is a kinematic diagram of an axle with two dual tyres together with a driving mechanism.

### Examples of embodiments of the invention

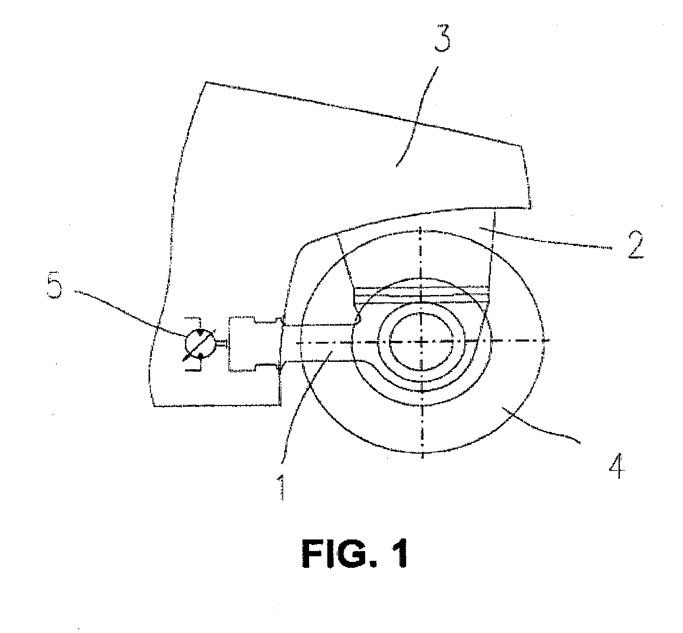

As a kinematic diagram, Fig. 1 shows a side view of an assembly of an axle of a tyre roller or a combined roller having a driving mechanism according to the present invention. The driving mechanism, i. e. the hydraulic motor 5, of the roller, is placed horizontally in a frame 3 of the machine and is connected to the axle 1 of the machine. Because of the design of the driving mechanism, the axle 1 can be placed also angled in a suitable angle in the frame of the machine, and therefore, it is possible to use the inner space of the machine more effectively for increasing of the ballast space. The ballast space is used to increase machine weigh during its working. In this embodiment, the axle 1 is mounted to the frame 3 of the machine by means of a bracket 2. Two dual tyre wheels 12 with tyres 4 are mounted on the axle 1. The dual tyre wheels 12 are to be understood as two wheels joined together and having the same direction and speed of rotation.

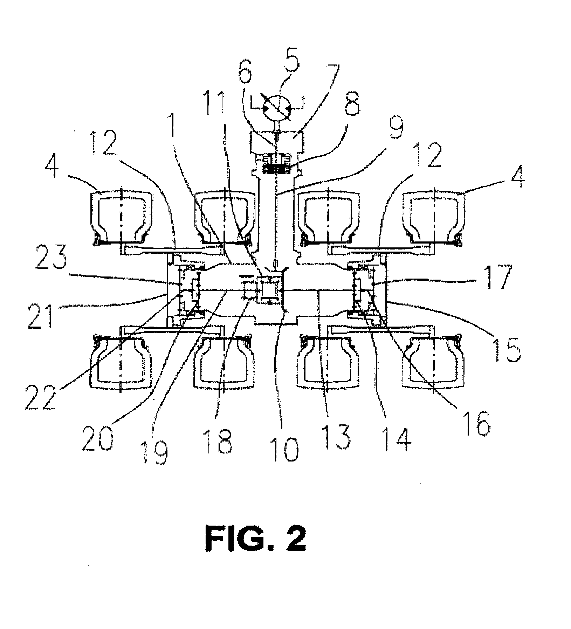

Fig. 2 shows from above a kinematic diagram of an axle 1 with two dual tyre wheels 12 with tyres 4 (i. e. for the left and the right sides of the axle 1) together with a driving mechanism. In the here shown embodiment, the axle 1 of the machine is provided with a hydraulic motor 5 joined with a multi-disk brake 8 by means of a grooved coupling 6. The multi-disk brake 8 is joined with a cone gearing 10 by means of an interconnecting shaft 9, a part of which is preferably a differential gearing 11. The first output of the differential gearing 11, which is joined with the cone gearing 10, is joined with the first transmission step 14 of the first terminal gearbox 15, preferably of the planet design, by means of the first shaft 13, and further with the second transmission step 17 of the first terminal gearbox 15 by means of the first interconnecting shaft 16, and via the with a flange provided output of the first terminal gearbox 15 it is joined with the first dual tyre wheel 12 with tyres 4. The second output of the differential gearing 11, provided with an interlock 18 of the differential gearing 11, is joined by means of a second shaft 19 with the first transmission step 20 of the second terminal gearbox 21, also preferably of a planet design, and further with the second transmission step 23 of the second terminal gearbox 21 by means of the second interconnecting shaft 22 and via the with a flange provided output of the second terminal gearbox 21 it is joined with the second dual tyre wheel 12 with tyres 4.

The dual tyre wheels 12 comprise of a drum shaped flange mounted to the mounting flange of the first and the second terminal gearboxes 15, 21 and of four identical wheel rims with tyres 4, with the inner flanges, which are correspondingly fastened to both drum shaped flanges of the axle 1.

In operation, the axle driven machine is required to move off continuously, smoothly to prevent damaging of the compacted surface by means of excessive torque transferred from the combustion engine to the driven axle. The combustion engine drives a pump (they are not shown) driving the hydraulic motor 5. The hydraulic motor 5 is provided with a standard grooved shaft at its output, which grooved shaft fits into the grooved coupling 6, whereby the possibility to dismantle the hydraulic motor 5 in case of its repairs and in other necessary situations is easily provided. The grooved coupling 6 interconnects the grooved shaft of the hydraulic motor 5 with the multi-disk brake 8. Further, the interconnecting shaft 9 transfers the torque from the hydraulic motor 5 to the cone gearing 10 of the axle 1. The torque is distributed from the cone gearing 10 by the differential gearing 11 to both to the left and the right sides of the axle 1. To the right side of the axle 1, the torque of the hydraulic motor 5 is transferred from the first output of the differential gearing 11 by means of the first shaft 13 to the first transmission step 14 of the first terminal planet gearbox 15, and further by the first interconnecting shaft 16 to the second transmission step 17 and further to the dual tyre wheel 12 with tyres 4. To the left side of the axle 1, the torque of the hydraulic motor 5 is transferred from the second output of the differential gearing 11 by means of the second shaft 19 to the first transmission step 20 of the second terminal planet gearbox 21, and further by the second interconnecting shaft 22 to the second transmission step 23 of the second terminal gearbox 21 and further to the second dual tyre wheel 12 with tyres 4. During moving off the pump increases its delivered volume, and thereby the hydraulic liquid flow rate to the hydraulic motor 5 of the axle 1 is increased. Having overcome the (mechanical, hydraulic) losses and the rolling resistance, the machine moves off. By tipping of the pump to its maximum, the maximum speed of the machine with a constant delivery motor is reached. If the machine is equipped with a controlled delivery motor, it is further tipped, up to the minimum volume delivered, to reach the maximum possible speed. In braking without any use of the multi-disk brake 8 the hydrostatic braking effect is used, when the pump, and eventually also the hydraulic motor 5 (in case the hydraulic motor 5 is a controlled delivery hydraulic motor) minimize their volumes, and thereby also the hydraulic liquid flow rate. Thereby, the machine slows down up to the final stopping. The same it is with the moving off of the machine in the opposite direction, when the liquid flow rate is directed to the opposite input of the hydraulic motor 5. Thereby the hydraulic motor 5 reverses its rotation direction and the machine moves in the opposite direction. In this case, the program controlled tipping of the pump and the hydraulic motor 5 according to a determined curve (the so called ramping function) is preferably used (in case of a controlled delivery motor) to obtain a continuous controlled moving off and stopping periods of the machine in both directions without any damaging of the compacted surface.

Thereby the combustion engine torque is limited during acceleration and deceleration of the machine without any use of the multi-disk brake 8. There may also be more pre-determined curves of the change in volume and driver can make a choice according to the work done by the machine. If the only hydrostatic braking of the machine is not sufficient, the multi-disk brake 8 is also used in the braking, which brake 8 is controlled, e. g. by means of a brake pedal. In such braking, both brakes (the hydrostatic brake and the service brake) are used, and it is possible to reach the maximum braking effect of the machine. In this braking method, the control according to the chosen curve (ramping function) is inactivated because of the safety reasons. The multi-disk brakes 8 can also be preferably used to limit the racing of the combustion engine during the hydrostatic braking, when by activating of the multi-disk brake 8 the machine speed and thereby the undesired progress rotation speed of the combustion motor are limited. During a machine shutdown, the multi-disk brake 8 pressure is released and the machine is braked by means of springs in the multi-disk brake 8, In case of a machine breakdown during its ride, driver activates the emergency STOP pushbutton, also the pressure of the multi-disk brake 8 control is released, and the machine stops safely.

### Industrial use

The invention can be used as the driving mechanism of an axle both in the tyre and the combined rollers, which rollers are used for example in compacting of the carrying, binding or covering layers of asphalt, but also in compacting the natural subsoil or the lime or cement stabilized materials.

## Claims

1. An assembly of the undirected axle (1) of a tyre roller or a combined roller, in particular of a road roller, with driven wheels (12) provided with tyres (4), which wheels (12) are arranged at least on both sides of said axle (1),
wherein said axle (1) is adapted for mounting in a frame (3) of said machine by means of a bracket (2) and is joined to a hydraulic motor (5) for driving of said wheels (12) with said tyres(4),
said hydraulic motor (5) is joined to a multi-disk brake (8), which multi-disk brake (8) serves both as the service, the safety and the parking brakes of said machine,
which multi-disk brake (8) is joined with a cone gearing (10) by an interconnecting shaft (9),
to which cone gearing (10) a driven wheel (12) provided with said tyre (4) is connected by a shaft (13, 19), which driven wheel (12) is provided with a hollow centre,
**characterized in that**
a differential gearing (11) provided with two opposite outputs is connected to said cone gearing (10),
which differential gearing (11) is provided with a differential interlock, (18),
wherein the first output of said differential gearing (11) is connected to the first terminal gearbox (15) provided with at least two transmission steps by means of the first rotary shaft (13),
where at least one driven wheel (12) provided with a tyre (4) is connected to the output of said first terminal gearbox (15),
and where the second output of said differential gearing (11) is connected to the second terminal gearbox (21) provided with at least two transmission steps by means of a second rotary shaft (19),
where at least one driven wheel (12) provided with a tyre (4) is also connected to the output of said second terminal gearbox (21),
wherein the transmission ratios of said first and said second terminal gearboxes (15, 21) are the same and said first and said second terminal gearboxes (15, 21), are arranged in the hollow centres of the respective wheels (12) with tyres (4) on both sides of said axle (1).

2. An assembly of the undirected axle of a tyre roller or a combined roller with driven wheels of claim 1, **characterized in that** said hydraulic motor (5) is joined with a multi-disk brake (8) by a grooved coupling (6).

3. An assembly of the undirected axle of a tyre roller or a combined roller with driven wheels of claims 1 or 2, **characterized in that** a dual tyre wheel (12) with tyres (4) is joined to each terminal gearbox (15, 21).

## Patentansprüche

1. Anordnung einer ungerichteten Achse (1) einer Reifenwalze oder einer kombinierten Walze, insbesondere eine Straßenwalze, mit angetriebenen Rädern (12), die mit Reifen versehen sind, wobei die Räder (12) wenigstens auf beiden Seiten der Achse (1) angeordnet sind,
wobei die Achse (1) dazu eingerichtet ist, in einem Rahmen (3) der Maschine mit Hilfe einer Konsole (2) angebracht zu werden, und mit einem hydraulischen Motor (5) zum Antreiben der Räder (12) mit den Reifen (4) verbunden ist,
der hydraulische Motor (5) mit einer Mehrfachscheibenbremse (8) verbunden ist, wobei diese Mehrfachscheibenbremse (8) sowohl als Wartungs-, Sicherheits- und Parkbremse der Maschine dient,
die Mehrfachscheibenbremse (8) mit einem Kegelgetriebe (10) durch eine Verbindungswelle (9) verbunden ist und
mit diesem Kegelgetriebe (10) ein angetriebenes Rad (12), das mit dem Reifen (4) versehen ist, durch eine Welle (13, 19) verbunden ist, wobei das angetriebene Rad (12) mit einem hohlen Zentrum versehen ist,
**dadurch gekennzeichnet, dass**
ein Differentialgetriebe (11), das mit zwei gegenüberliegenden Ausgängen versehen ist, mit dem Kegelgetriebe (10) verbunden ist,
das Differentialgetriebe (11) mit einer Differentialsperre (18) versehen ist,
der erste Ausgang des Differentialgetriebes (11) mit dem ersten Anschlussgetriebekasten (15), der mit wenigstens zwei Übersetzungsstufen ausgestattet ist, mit Hilfe der ersten Drehwelle (13) verbunden ist,
wenigstens ein angetriebenes Rad (12), das mit einem Reifen (4) versehen ist, mit dem Ausgang des ersten Anschlussgetriebekastens (15) verbunden ist,
und der zweite Anschluss des Differentialgetriebes (11) mit dem zweiten Anschlussgetriebekasten (21), der mit wenigstens zwei Übersetzungsstufen ausgestattet ist, mit Hilfe einer zweiten Drehwelle (19) verbunden ist,
wobei wenigstens ein angetriebenes Rad (12), das mit einem Reifen (4) versehen ist, ebenfalls mit dem Ausgang des zweiten Anschlussgetriebekastens (21) verbunden ist, und
die Übersetzungsverhältnisse des ersten und des zweiten Anschlussgetriebekastens (15, 21) dieselben sind und der erste sowie der zweite Anschlussgetriebekasten (15, 21) in den hohlen Zentren der entsprechenden Räder (12) mit Reifen (4) auf beiden Seiten der Achse (1) angeordnet sind.

2. Anordnung einer ungerichteten Achse einer Reifenwalze oder einer kombinierten Walze mit angetriebenen Rädern nach Anspruch 1, **dadurch gekennzeichnet, dass** der hydraulische Motor (5) mit einer Mehrfachscheibenbremse (8) durch eine rillenförmige Kopplung (6) verbunden ist.

3. Anordnung einer ungerichteter Achse einer Reifenwalze oder einer kombinierten Walze mit angetriebenen Rädern nach Anspruch 1 oder 2, **dadurch gekennzeichnet, dass** ein Zwillingsreifenrad (12) mit Reifen (4) mit jedem Anschlussgetriebekasten (15, 21) verbunden ist.

## Revendications

1. Assemblage d'un essieu non dirigé (1) d'un compacteur à pneus ou d'un compacteur combiné, en particulier d'un rouleau compresser, avec des roues entraînées (12) munies de pneus (4), lesquelles roues (12) sont disposées au moins sur les deux côtés dudit essieu (1),
ledit essieu (1) étant adapté pour un montage dans un châssis (3) de ladite machine au moyen d'un support (2) et étant relié à un moteur hydraulique (5) pour l'entraînement desdites roues (12) ayant lesdits pneus (4),
ledit moteur hydraulique (5) est relié à un frein à disques multiples (8), lequel frein à disques multiples (8) sert à la fois de frein de service, de frein de sécurité et de frein de parcage de ladite machine,
lequel frein à disques multiples (8) est relié à un engrenage conique (10) par un arbre de liaison (9),
auquel engrenage conique (10) une roue entraînée (12) munie d'un pneu (4) est reliée par un arbre (13, 19), laquelle roue entraînée (12) comporte un centre creux,
**caractérisé par le fait que** :
un engrenage de différentiel (11) comportant deux sorties opposées est relié audit engrenage conique (10),
lequel engrenage de différentiel (11) comporte un verrouillage de différentiel (18),
la première sortie dudit engrenage de différentiel (11) étant reliée à la première boîte de vitesses de sortie (15) comportant au moins deux étages de transmission au moyen du premier arbre rotatif (13),
au moins une roue entraînée (12) munie d'un pneu (4) étant reliée à la sortie de ladite première boite de vitesses de sortie (15),
et la seconde sortie dudit engrenage de différentiel (11) étant reliée à la seconde boite de vitesses de sortie (21) comportant au moins deux étages de transmission au moyen d'un second arbre rotatif (19),
au moins une roue entraînée (12) munie d'un pneu (4) étant régalement reliée à la sortie de ladite seconde boite de vitesses de sortie (21),
les rapports de transmission desdites première et seconde boîtes de vitesses de sortie (15, 21) étant identiques et lesdires première et seconde boites de vitesses de sortie (15, 21) étant disposées dans les centres creux des roues respectives (12) avec pneus (4) sur les deux côtés dudit essieu (1).

2. Assemblage de l'essieu non dirigé d'un compacteur à pneus ou d'un compacteur combiné avec des roues entraînées selon la revendication 1, **caractérisé par le fait que** ledit moteur hydraulique (5) est relié à un frein à disques multiples (8) par un accouplement cannelé (6).

3. Assemblage de l'essieu non dirigé d'un compacteur à pneus ou d'un compacteur combiné avec des roues entraînées selon la revendication 1 au 2, **caractérise par le fait qu'**une roue à pneus jumelés (12) avec des pneus (4) est reliée à chaque boite de vitesses de sortie (15, 21).
